# EUROPÄISCHE PATENTSCHRIFT

(11) **EP 0 583 670 B1**
(45) Veröffentlichungstag und Bekanntmachung des Hinweises auf die Patenterteilung: **08.10.1997**
(21) Anmeldenummer: 93112311.1
(22) Anmeldetag: 31.07.1993
(51) Int. Cl.: C22B 5/04, C06B 33/00, C21B 15/02

(54) **Metallothermisches Reaktionsgemisch**
Metallothermic reaction mixture
Amalgame pour réactions métallothermiques

(30) Priorität: 14.08.1992 DE 4226982
(43) Veröffentlichungstag der Anmeldung: 23.02.1994
(73) Patentinhaber: Elektro-Thermit GmbH, D-45139 Essen (DE)
(72) Erfinder: Wirtz, Johann-Hugo, D-45133 Essen (DE)
(74) Vertreter: Rotenberg, Klaus, Dr.

(56) Entgegenhaltungen:
- DE-A- 1 097 625
- DE-A- 1 467 737
- DE-B- 1 808 315
- DE-C- 572 523
- GB-A- 873 570
- GB-A- 900 811
- US-A- 3 649 390
- JOURNAL OF METALS Bd. 25, Nr. 5 , Mai 1973 , NEW YORK US Seiten 39 - 44 DAVID BELITSKUS 'Aluminothermic production of ferroalloys'
- JOURNAL OF METALS Bd. 24, Nr. 1 , Januar 1972 , NEW YORK US Seiten 30 - 34 DAVID BELITSKUS 'Aluminothermic production of metals and alloys'

## Beschreibung

Die Erfindung betrifft ein metallothermisches Reaktionsgemisch, welches aus einem Metalloxid, einem gegenüber dem Metalloxid unedleren Metall und gegebenenfalls weiteren Zuschlagsstoffen besteht, wobei die einzelnen Bestandteile in Form kleiner Teilchen vorliegen.

Metallothermische Reaktionen und Gemische zu ihrer Durchführung sind seit über 100 Jahren bekannt. Die metallothermische Reaktion beruht auf der Reduktion eines Metalloxides durch ein gegenüber dem Metall des Metalloxides unedleres Metall, wobei sich die Reaktion nach lokaler Zündung des Reaktionsgemisches unter Wärmeentwicklung mehr oder weniger schnell durch das metallothermische Reaktionsgemisch fortpflanzt. Dabei wird das unedlere Metall oxidiert und schwimmt als schmelzflüssige Schlacke auf, während die Schmelze des edleren Metalles sich von der Schlacke trennt und sich im unteren Teil des Reaktionsgefäßes sammelt. Technisch haben sich dabei insbesondere aluminothermische und calciothermische Reaktionsgemische zur Erzeugung von Eisen- und Stahlschmelzen sowie zur Herstellung kohlefreier Metalle und Sonderlegierungen bewährt.

Es bereitete zunächst Schwierigkeiten, die metallothermische, stark exotherme Reaktion in technisch beherrschbarer Form durchzuführen. Wesentlich war der Vorschlag, die Reaktion durch punktförmige Zündung mit einer leicht entzündbaren pyrophoren Masse oder durch eine Magnesiumfolie in Gang zu setzen, wie dies in der DE-PS 96 317 erstmalig 1895 beschrieben wurde.

Zur Erzielung einer Stahlschmelze bestimmter Zusammensetzung müssen dem Eisenoxid/Aluminiumgemisch Legierungselemente in unterschiedlicher Form und Zusammensetzung zugegeben werden. Legierungspartner können dem Reaktionsgemisch als Metalle in Grießform oder in Form ihrer Oxide oder anderer chemischer Verbindungen zugesetzt werden. Es ist möglich, Kohlenstoff in freier Form oder in Form von Karbid zuzusetzen, um eine Aufkohlung des aluminothermisch erzeugten Stahls zu bewirken. Dem Reaktionsgemisch können Mittel zur Dämpfung der exothermen Reaktion, z.B. in Form von Graugußabfallstücken, Baustahlstanzabfällen und dgl. zugesetzt werden.

In allen diesen Fällen ist es aber zur Erzielung eines reproduzierbaren Reaktionsproduktes notwendig, daß die aluminothermische oder allgemeiner die metallothermische Reaktion möglichst gleichmäßig abläuft und daß dieser gleichmäßige Reaktionsablauf reproduzierbar ist. Bei unterschiedlich schnellem Reaktionsablauf kann der Abbrand der Legierungsbildner unterschiedlich ausfallen. Dies führt zu Legierungen unterschiedlicher Zusammensetzung und damit auch unterschiedlichen Eigenschaften. Wird die Reaktion in einem Gießtiegel durchgeführt, dessen Bodenöffnung durch einen durchschmelzbaren Verschluß abgedichtet ist, wie er z.B. in der DE-PS 32 11 831 beschrieben ist, soll das Durchschmelzen des Verschlusses in einem genau vorbestimmten Zeitintervall nach Zündung des Gemisches erfolgen, um sicherzustellen, daß die Reaktion zu einem Endpunkt gekommen ist und die Schlacke sich von der Metallschmelze vollständig getrennt hat. Bei einem zu frühen Durchschmelzen des Verschlusses können noch nicht abgetrennte flüssige Schlacketeilchen von der ausströmenden Metallschmelze mitgerissen werden. Erfolgt das Durchschmelzen des Verschlusses zu spät, kann die Schmelze bereits zu stark abgekühlt sein und damit einen Zustand annehmen, der bei bestimmten technischen Verfahren unerwünscht ist.

Man hat versucht, die Reproduzierbarkeit der metallothermischen Reaktion durch Optimierung der Reaktionstiegel in bezug auf ihre Form (Spitzkegel unterschiedlichen Neigungswinkels), ihre Größe, Auskleidung, Abdeckung und dgl. zu verbessern. Man hat dabei gewisse Verbesserungen erzielt. In besonderem Maße war allerdings für das Ergebnis der Reaktion und dessen Reproduzierbarkeit die Handfertigkeit und Erfahrung der mit der Durchführung der Reaktion beauftragten Personen von Einfluß.

Die vorliegende Erfindung befaßt sich mit dem technischen Problem der Vergleichmäßigung der metallothermischen Reaktion, insbesondere der aluminothermischen Eisenoxidreaktion, zwecks Verbesserung der Reproduzierbarkeit des Reaktionsablaufes und damit der Reaktionszeit und der Reaktionsprodukte. Dabei soll die Verbesserung im wesentlichen durch eine besonders günstig zusammengesetzte Reaktionsmasse erzielt werden, ohne daß dabei die bekannten apparativen Verbesserungsmöglichkeiten außer acht gelassen werden sollen.

Das erfindungsgemäße metallothermische Reaktionsgemisch ist dadurch gekennzeichnet, daß mindestens 20 Gew.-% des Metalloxides in Form kugelförmiger Partikel einer Teilchengröße von 0,1 bis 3,0 mm vorliegen.

Üblicherweise wird zur Herstellung metallothermischer Gemische als Eisenoxid Zunder verwendet, der beim Walzen oder Drahtziehen anfällt, wobei in der Mischung stark voneinander abweichende Formen vorliegen: stäbchenförmige, flächige, quasi-rechteckige oder ovale und fast kubische Partikel, deren Mischung, selbst bei stark eingeschränkter Bandbreite des Kornspektrums, immer noch Unterschiede im Reaktionsablauf bewirken kann mit der Folge unterschiedlicher Wärmeverluste durch ungleichmäßige Abstrahlung oder durch die Öffnung des Verschlusses vom Gußtiegel zum falschen Zeitpunkt. Unterschiede im Reaktionsablauf können auch die Zusammensetzung des Endproduktes beeinflussen.

DE-A-1 467 737 offenbart den Einsatz von beim Frischen von Stahl entstanderem braunem Staub als Eisenoxid in einer metallothermischen Mischung. Die Korngröße des Staubes liegt insbesondere unter 1 µm und eine Bedeutung einer Kugelform ist in der DE-A nicht erkannt worden.

Bei Verwendung eines erfindungsgemäßen Gemisches wird beobachtet, daß sich der Reaktionsablauf verstetigt. Ohne die Erfindung durch nachträgliche Vermutungen über die möglichen Gründe hierfür einengen zu wollen, spricht doch manches dafür, daß die Verstetigung des Reaktionsablaufes durch den Einsatz von Metalloxidpartikeln mit einem definierten Verhältnis von Oberfläche zu Masse bedingt wird, welches durch den zumindest teilweisen Ersatz der bislang in streuender Form vorliegenden Partikel durch Partikel in Kugelform erfindungsgemäß eingestellt wird. Man hat es dabei in der Hand, durch Auswahl einer geeigneten Korngröße Reaktionsmischungen herzustellen, die ein gewünschtes Reaktionsverhalten aufweisen.

Dabei ist überraschend, daß die angestrebte Verstetigung der Reaktion bereits bei Substitution von nur etwa 20 Gew.-% der herkömmlichen Metalloxidpartikel durch solche in Kugelform einsetzt und sich bis zu einem statistisch noch nachweisbaren Optimum bei etwa 90 Gew.-% der Metalloxidpartikel in Kugelform stetig steigert.

Metalloxidpartikel können durch aus dem Stand der Technik bekannte Verfahren, wie z.B. durch Pelletisieren, in Kugelform überführt werden. Dabei werden die Partikel des Metalloxids, z.B. des Eisenoxids, in einem Kollergang verdichtet. Die in Kugelform anfallenden Partikel werden dann auf die gewünschte Kornbandbreite abgesiebt.

Ein bevorzugtes Gemisch enthält kugelförmige Partikel einer Teilchengröße von 0,1 bis 2,0 mm. Ein solches Gemisch reagiert zügig und setzt die bei der Reaktion resultierende Wärmemenge in kurzer Zeit frei. Die Wärmeverluste durch Abstrahlung werden minimiert.

Ein besonderes Problem bei der Herstellung, dem Transport, der Handhabung sowie der Ein- und Auslagerung von metallothermischen Reaktionsgemischen, soweit sie nicht in verfestigter Form vorliegen, ist deren Tendenz zur Entmischung. Dies ist insbesondere auf die Unterschiede im spezifischen Gewicht der Bestandteile des metallothermischen Reaktionsgemisches zurückzuführen.

Es wurde nun gefunden, daß man dieser Entmischung bei den erfindungsgemäßen Reaktionsgemischen entgegenwirken kann. Dies gelingt in einfacher Weise dadurch, daß man das unedlere Metall, im allgemeinen somit das Aluminium oder Calcium, in von der sphärischen Form abweichender, überwiegend spratziger Form mit einer Teilchengröße von 0,1 bis 1,5 mm einsetzt. Durch die Kombination des kugeligen Metalloxides bestimmter Teilchengröße mit einem in spratziger Form vorliegenden Reduktionsmetall bestimmter Teilchengröße wird ein Maximum an Verstetigung des Reaktionsablaufes bei einem Höchstmaß an Sicherheit gegen Entmischung des Reaktionsgemisches bei Transport, Handhabung und Lagerung erreicht.

In dem erfindungsgemäßen metallothermischen Reaktionsgemisch ist das Metalloxid vorzugsweise Eisenoxid und das unedlere Metall vorzugsweise Aluminium. Im Bedarfsfalle können Legierungsbildner zugesetzt werden. Das kugelförmige Eisenoxid kann entsprechend den bereits beschriebenen Verfahren durch Verdichtung im Kollergang oder nach anderen, dem Fachmann ohne erfinderisches Zutun zugänglichen Verfahren erhalten werden. Es können auch bei anderen Verfahren anfallende Eisenoxidpartikel verwendet werden, soweit sie kugelförmige Gestalt haben, insbesondere und vorzugsweise wie sie durch Recycling von Beizbadrückständen erhältlich sind. Hierbei wird ein in größeren Mengen anfallendes industrielles Abfallprodukt in wirtschaftlich vorteilhafter und technisch wertvoller Weise verwertet.

Beispiele erfindungsgemäßer metallothermischer Reaktionsgemische, jeweils bezogen auf ein aluminothermisches Grundgemisch aus Eisenoxid und Aluminium im Gesamtgewicht von 1000 g, sind:

| Gemisch 1: | | |
|---|---|---|
| 800 g FeO, | kugelförmig, | Kornbandbreite > 0 - 3,0 mm |
| 200 g Al, | spratzig, | Kornbandbreite > 0 - 1,5 mm |

| Gemisch 2: | | |
|---|---|---|
| 763 g Fe₃O₄, | kugelförmig, | Kornbandbreite > 0 - 3,0 mm |
| 237 g Al, | spratzig, | Kornbandbreite > 0 - 1,5 mm |

| Gemisch 3: | | |
|---|---|---|
| 747 g Fe₂O₃, | kugelförmig, | Kornbandbreite > 0 - 3,0 mm |
| 253 g Al, | spratzig, | Kornbandbreite > 0 - 1,5 mm |

| Gemisch 4: | | |
|---|---|---|
| 572 g Fe₃O₄, | kugelförmig, | Kornbandbreite > 0 - 3,0 mm |
| 191 g Fe₃O₄, | Walzzunder, | Kornbandbreite > 1 - 3,0 mm |
| 237 g Al, | spratzig, | Kornbandbreite > 0 - 1,5 mm |

| Gemisch 5: | | |
|---|---|---|
| 448 g Fe₂O₃, | kugelförmig, | Kornbandbreite > 0 - 3,0 mm |
| 299 g Fe₂O₃, | Walzzunder, | Kornbandbreite > 0 - 1,5 mm |
| 253 g Al, | spratzig, | Kornbandbreite > 0 - 1,5 mm |

### Gemisch 6:

Wie Gemisch 5, jedoch mit Zusatz von 350 g Ferromangan in Teilchenform.

## Patentansprüche

1. Metallothermisches Reaktionsgemisch, welches aus einem Metalloxid, einem gegenüber dem Metalloxid unedleren Metall und gegebenenfalls weiteren Zuschlagsstoffen besteht, wobei die einzelnen Bestandteile in Form kleiner Teilchen vorliegen, dadurch gekennzeichnet, daß mindestens 20 Gew.-% des Metalloxides in Form kugelförmiger oder zumindest angenähert kugelförmiger Partikel einer Teilchengröße von 0,1 bis 3,0 mm vorliegen.

2. Gemisch nach Anspruch 1, dadurch gekennzeichnet, daß die kugelförmigen Partikel eine Teilchengröße von 0,1 bis 2,0 mm aufweisen.

3. Gemisch nach einem oder mehreren der vorhergehenden Ansprüche, dadurch gekennzeichnet, daß das Metalloxid Eisenoxid und das unedlere Metall Aluminium ist.

4. Gemisch nach Anspruch 1 oder 2, dadurch gekennzeichnet, daß als sphärisches Eisenoxid ein Produkt verwendet wird, das durch Recycling von Beizbadrückständen erhältlich ist.

5. Gemisch nach Anspruch 1, 2 oder 3, dadurch gekennzeichnet, daß das Eisenoxid in pelletisierter Form vorliegt.

6. Gemisch nach einem oder mehreren der vorhergehenden Ansprüche, dadurch gekennzeichnet, daß das unedlere Metall in von der sphärischen Form abweichender, überwiegend spratziger Form mit einer Teilchengröße von > 0 bis 1,5 mm vorliegt.

## Claims

1. Metallothermic reaction mixture which consists of a metal oxide, a baser metal than that of the metal oxide and, if appropriate, further additives, the individual constituents being present in the form of small particles, characterized in that at least 20% of the metal oxide are in the form of spherical or at least approximately spherical particles of a size from 0.1 to 3.0 mm.

2. Mixture according to Claim 1, characterized in that the spherical particles have a size from 1.0 to 2.0 mm.

3. Mixture according to one or more of the preceding claims, characterized in that the metal oxide is iron oxide and the baser metal is aluminium.

4. Mixture according to Claim 1 or 2, characterized in that the spherical iron oxide used is a product obtainable by recycling pickling bath residues.

5. Mixture according to Claim 1, 2 or 3, characterized in that the iron oxide is in a pelletized form.

6. Mixture according to one or more of the preceding claims, characterized in that the baser metal is in a predominantly spattered form, deviating from the spherical form, with a particle size from > 0 to 1.5 mm.

## Revendications

1. Amalgame métallothermique, qui se compose d'un oxyde métallique, d'un métal moins noble vis-à-vis de l'oxyde métallique et, le cas échéant, de substances additives supplémentaires, les constituants individuels étant présents sous la forme de petites particules, caractérisé en ce qu'au moins 20 % en poids de l'oxyde métallique sont présents sous la forme de particules sphériques ou au moins approximativement sphériques d'une grandeur de particules allant de 0,1 à 3,0 mm.

2. Mélange selon la revendication 1, caractérisé en ce que les particules sphériques présentent une grandeur de particules de 0,1 à 2,0 mm.

3. Mélange selon une ou plusieurs des revendications précédentes, caractérisé en ce que l'oxyde métallique est l'oxyde de fer et en ce que le métal moins noble est l'aluminium.

4. Mélange selon la revendication 1 ou 2, caractérisé en ce que l'on utilise, en tant qu'oxyde de fer sphérique, un produit que l'on peut obtenir par le recyclage de résidus de bains de décapage.

5. Mélange selon la revendication 1, 2 ou 3, caractérisé en ce que l'oxyde de fer est présent sous forme de boulettes.

6. Mélange selon une ou plusieurs des revendications précédentes, caractérisé en ce que le métal moins noble est présent dans une forme déviant de la forme sphérique, essentiellement irrégulière ayant une grandeur de particule de > 0 à 1,5 mm.
